# EUROPEAN PATENT APPLICATION

(11) **EP 2 579 643 A1**
(43) Date of publication of application: **10.04.2013**
(21) Application number: 11817721.1
(22) Date of filing: 16.06.2011
(51) Int. Cl.: H04W 28/16

(54) **METHOD AND SYSTEM FOR REALIZING GRANT IN FAST SCHEDULING**

(30) Priority: 16.08.2010 CN 201010257629
(71) Applicant: ZTE Corporation, Shenzhen, Guangdong 518057 (CN)
(72) Inventor: KE, Yazhu, Shenzhen City Guangdong Province, 518057 (CN); CHENG, Xiang, Shenzhen City Guangdong Province, 518057 (CN); LIU, Lin, Shenzhen City Guangdong Province, 518057 (CN)
(74) Representative: Novagraaf Technologies
(86) International application number: PCT/CN2011/075834
(87) International publication number: WO 2012/022194

(57) **Abstract**

The present invention provides a method and system for realizing grant in fast scheduling. The method comprises: the drift radio network subsystem analyzing the received Radio Network Subsystem Application Part (RNSAP) layer control signaling; when a 16 Quadrature Amplitude Modulation (16QAM) operation is activated, a drift radio network subsystem determining a scheduling grant table according to an absolute grant value mapping relationship table specified by a serving radio network subsystem; and implementing grant according to the specified absolute grant value mapping relationship table and the determined scheduling grant table. In the present invention, the scheduling grant table, determined by the drift radio network subsystem according to the specified absolute grant value mapping relationship table in the RNSAP layer control signaling, is a scheduling grant table in which the actual grant value corresponding to the maximum index is the same as the actual grant value in the absolute grant value mapping relationship table, therefore, a base station and UE cooperate between absolute grant and scheduling grant of an E-AGCH based on the same mapping relationship, thereby guaranteeing the normal realization of the grant and ensuring the performance of the fast scheduling.

## Description

### Technical Field

The present invention relates to fast scheduling technology in a High Speed Uplink Packet Access (HSUPA) system, and more particularly, to a method and system for implementing grant in fast scheduling.

### Background of the Related Art

In a wireless communication system, an Interconnection of Radio Network Subsystem (IUR) interface is an interface via which the radio network subsystem exchanges signaling and data with other radio network subsystems and is an interconnection tie between the radio network subsystems.

A Radio Network Subsystem Application Part (RNSAP) protocol layer is used to provide control signaling between radio network controllers.

When a terminal establishes a connection to a radio access network and generates soft handover at the IUR interface, resources of more than two radio network subsystems will be used, and different radio network subsystems play different roles at this point.

A radio network subsystem maintaining an interface connection between the terminal and a core network is called as a serving radio network subsystem. The serving radio network subsystem is responsible for data transmission between the core network and terminal, and forwarding/receiving of interface signaling to/from the core network; control of radio resources; processing of air interface data at layer 2, and executing basic radio resource management operations, such as handover decision, outer loop power control, and conversion of radio access bearer parameters to air interface transmission channel parameters, etc.

Other radio network subsystems except the serving radio network subsystem are called as drift radio network subsystems. The drift radio network subsystems are used to control cells used by the terminal. If desired, the drift radio network subsystems can implement macro diversity combination. Unless the terminal uses a common transmission channel, the drift radio network subsystems will not process terminal plane data at layer 2, but only transparently transmit the air interface data to the serving radio network subsystem through routing of the IUR interface. Drift radio network subsystems of one terminal may include one or more than one drift radio network subsystems.

HSUPA is a technology for uplink performance enhancement. The HSUPA increases a data transmission rate in an uplink direction from a terminal to an access network by utilizing power effectively when channel conditions are good. The HSUPA technology continues to use most characteristics of the traditional wireless communication technology, such as cell selection, synchronization, random access and basic mobility management, etc. The key technology of the HSUPA lies in Hybrid Automatic Repeat Request (HARQ), fast scheduling, and a short Transmission Time Interval (TTI) of 2 milliseconds.

The fast scheduling technology is a technology in which the scheduling performed by a radio network controller in a radio network subsystem in a traditional wireless communication system is moved forward to a node B in the radio network subsystem. In each TTI, the terminal reports information such as the amount of data to be sent cached by the terminal currently and current available power of the terminal to the node B by uploading scheduling information; according to a fast scheduling algorithm, that is, according to cell load and cell uplink interference, the amount of data to be sent of the terminal, capability upper limit of the terminal, scheduling policy of the node B itself and current channel quality of the terminal, the node B decides the maximum uplink resources available currently to the terminal (decides the current available maximum transmission rate of the terminal), and informs the terminal of this information by sending Scheduling Grant. Using the fast scheduling technology, round-trip delay of scheduling signaling is reduced greatly to ensure that a scheduling response is made rapidly and radio link resources are utilized better, thereby improving system throughput.

If the IUR interface is involved, the scheduling grant is control signaling sent by a drift radio network subsystem to the terminal in a downlink direction for indicating the maximum uplink resources available to the terminal (deciding the current available maximum transmission rate of the terminal). The scheduling grant has following characteristics:

The scheduling grant is only used for an Enhanced Transport Format Combination (E-TFC) selection algorithm.

The scheduling grant controls the maximum Enhanced Dedicated Channel Dedicated Physical Data Channel/Dedicated Physical Control Channel (E-DPDCH/DPCCH) power ratio used in transmitting data in an activated HARQ process.

There are two types of scheduling grant: absolute grant and relative grant.

The absolute grant provides the maximum uplink power resources available to the terminal, and is the maximum allowable E-DPDCH/DPCCH power ratio in each HARQ process.

The relative grant, including serving relative grant and non-serving relative grant, indicates that the terminal up-regulates or decreases power resources used in the previous scheduling by a relative value. The serving relative grant specifically includes three values, UP, HOLD and DOWN, and the non-serving relative grant specifically includes two values, HOLD and DOWN.

The drift radio network subsystem sends the absolute grant according to absolute grant value mapping relationship table one shown in Table 1 or absolute grant value mapping relationship table two shown in Table 2.

**Table 1**

| Absolute grant value | Index number |
|---|---|
| (168/15)²x6 | 31 |
| (150/15)²x6 | 30 |
| (168/15)²x4 | 29 |
| (150/15)²x4 | 28 |
| (134/15)²x4 | 27 |
| (119/15)²x4 | 26 |
| (150/15)²x2 | 25 |
| (95/15)²x4 | 24 |
| (168/15)² | 23 |
| (150/15)² | 22 |
| (134/15)² | 21 |
| (119/15)² | 20 |
| (106/15)² | 19 |
| (95/15)² | 18 |
| (84/15)² | 17 |
| (75/15)² | 16 |
| (67/15)² | 15 |
| (60/15)² | 14 |
| (53/15)² | 13 |
| (47/15)² | 12 |
| (42/15)² | 11 |
| (38/15)² | 10 |
| (34/15)² | 9 |
| (30/15)² | 8 |
| (27/15)² | 7 |
| (24/15)² | 6 |
| (19/15)² | 5 |
| (15/15)² | 4 |
| (11/15)² | 3 |
| (7/15)² | 2 |
| Zero-grant | 1 |
| Non-activated | 0 |

For example, if the drift radio network subsystem decides that the maximum E-DPDCH/DPCCH power ratio of the terminal used in transmitting data in the activated HARQ process is (168/15)²x6 according the fast scheduling algorithm, that is to say, the drift radio network subsystem decides an absolute grant value of (168/15)²x6, then an index number 31 corresponding to the absolute grant value (168/15)²x6 is obtained by searching Table 1. Therefore, the drift radio network subsystem sends the absolute grant with the index number 31 to the terminal for indicating that the maximum uplink resources available to the terminal (deciding the current available maximum transmission rate of the terminal) is the maximum E-DPDCH/DPCCH power ratio (168/15)²x6 used in transmitting data in the activated HARQ process.

**Table 2**

| Absolute grant value | Index number |
|---|---|
| (377/15)²x4 | 31 |
| (237/15)²x6 | 30 |
| (168/15)²*₆ | 29 |
| (150/15)²*₆ | 28 |
| (168/15)²*₄ | 27 |
| (150/15)²x4 | 26 |
| (134/15)²x4 | 25 |
| (119/15)²x4 | 24 |
| (150/15)²x2 | 23 |
| (95/15)²x4 | 22 |
| (168/15)² | 21 |
| (150/15)² | 20 |
| (134/15)² | 19 |
| (119/15)² | 18 |
| (106/15)² | 17 |
| (95/15)² | 16 |
| (84/15)² | 15 |
| (75/15)² | 14 |
| (67/15)² | 13 |
| (60/15)² | 12 |
| (53/15)² | 11 |
| (47/15)² | 10 |
| (42/15)² | 9 |
| (38/15)² | 8 |
| (34/15)² | 7 |
| (30/15)² | 6 |
| (27/15)² | 5 |
| (24/15)² | 4 |
| (19/15)² | 3 |
| (15/15)² | 2 |
| zero-grant | 1 |
| Non-activated | 0 |

For example, if the drift radio network subsystem decides that the maximum E-DPDCH/DPCCH power ratio of the terminal used in transmitting data in the activated HARQ process is (377/15)²x4 according the fast scheduling algorithm, that is to say, the drift radio network subsystem decides an absolute grant value of (377/15)²x4, then an index number 31 corresponding to the absolute grant value (168/15)²x4 is obtained by searching Table 1. Therefore, the drift radio network subsystem sends the absolute grant with the index number 31 to the terminal for indicating that the maximum uplink resources available to the terminal (deciding the current available maximum transmission rate of the terminal) is the maximum E-DPDCH/DPCCH power ratio (377/15)²x4 used in transmitting data in the activated HARQ process.

The drift radio network subsystem sends the relative grant according to scheduling grant table one shown in Table 3 or scheduling grant table two shown in Table 4.

**Table 3**

| Index number | Scheduling grant |
|---|---|
| 37 | (168/15)²*6 |
| 36 | (150/15)²*6 |
| 35 | (168/15)²*4 |
| 34 | (150/15)²*4 |
| 33 | (134/15)²*4 |
| 32 | (119/15)²*4 |
| 31 | (150/15)²*2 |
| 30 | (95/15)²*4 |
| 29 | (168/15)² |
| 28 | (150/15)² |
| 27 | (134/15)² |
| 26 | (119/15)² |
| 25 | (106/15)² |
| 24 | (95/15)² |
| 23 | (84/15)² |
| 22 | (75/15)² |
| 21 | (67/15)² |
| 20 | (60/15)² |
| 19 | (53/15)² |
| 18 | (47/15)² |
| 17 | (42/15)² |
| 16 | (38/15)² |
| 15 | (34/15)² |
| 14 | (30/15)² |
| 13 | (27/15)² |
| 12 | (24/15)² |
| 11 | (21/15)² |
| 10 | (19/15)² |
| 9 | (17/15)² |
| 8 | (15/15)² |
| 7 | (13/15)² |
| 6 | (12/15)² |
| 5 | (11/15)² |
| 4 | (9/15)² |
| 3 | (8/15)² |
| 2 | (7/15)² |
| 1 | (6/15)² |
| 0 | (5/15)² |

**Table 4**

| Index number | Scheduling grant |
|---|---|
| 37 | (377/15)²x4 |
| 36 | (336/15)²x4 |
| 35 | (237/15)²x6 |
| 34 | (212/15)²x6 |
| 33 | (237/15)²x4 |
| 32 | (168/15)²*6 |
| 31 | (150/15)²*6 |
| 30 | (168/15)²*4 |
| 29 | (150/15)²x4 |
| 28 | (134/15)²x4 |
| 27 | (119/15)²x4 |
| 26 | (150/15)²x2 |
| 25 | (95/15)²x4 |
| 24 | (168/15)² |
| 23 | (150/15)² |
| 22 | (134/15)² |
| 21 | (119/15)² |
| 20 | (106/15)² |
| 19 | (95/15)² |
| 18 | (84/15)² |
| 17 | (75/15)² |
| 16 | (67/15)² |
| 15 | (60/15)² |
| 14 | (53/15)² |
| 13 | (47/15)² |
| 12 | (42/15)² |
| 11 | (38/15)² |
| 10 | (34/15)² |
| 9 | (30/15)² |
| 8 | (27/15)² |
| 7 | (24/15)² |
| 6 | (21/15)² |
| 5 | (19/15)² |
| 4 | (17/15)² |
| 3 | (15/15)² |
| 2 | (13/15)² |
| 1 | (12/15)² |
| 0 | (11/15)² |

The serving relative grant specifically includes three values, UP, HOLD and DOWN. The drift radio network subsystem sending the serving relative grant specifically includes: the drift radio network subsystem sending the serving relative grant according to the Table 3 or 4, calculating a reference power ratio, calculating an desired scheduling grant value according to the fast scheduling algorithm, comparing the desired scheduling grant value with the reference power ratio, determining whether to up-regulate, maintain or decrease the reference power ratio, and then sending control signaling of the corresponding serving relative grant. The reference power ratio is an E-DPDCH/DPCCH power ratio which is used by the previous TTI having the same HARQ process as this data transmission to select an E-TFC.

The non-serving relative grant specifically includes two values, HOLD and DOWN. The drift radio network subsystem sending the non-serving relative grant specifically includes: the drift radio network subsystem sending the non-serving relative grant according to the Table 3 or 4, calculating a reference record saving power ratio, calculating an desired scheduling grant value according to the fast scheduling algorithm, comparing the desired scheduling grant value with the reference record saving power ratio, determining whether to maintain or decrease the reference record saving power ratio, and then sending control signaling of the corresponding non-serving relative grant. The reference record saving power ratio is a new value recorded and saved when an E-DPDCH/DPCCH power ratio which is used by the previous TTI having the same HARQ process as this data transmission to select the E-TFC is updated to be the new value.

Modulation modes used by the HSUPA includes Quadrature Phase Shift Keying (QPSK) and 16 Quadrature Amplitude Modulation (16QAM). The QPSK, which is a digital modulation mode, is divided into absolute phase shift and relative phase shift; and the 16QAM is a digital high order modulation mode in which information amount of each symbol is two times of the QPSK. Compared with the QPSK, the 16QAM can use channel bandwidth more effectively. Moreover, due to the introduction of the 16QAM high order modulation mode, a higher grant value is required to be introduced to satisfy the requirement of higher rate.

In the existing engineering application, especially in an application scenario of the 16QAM, using the above method for realizing grant in the fast scheduling, when the drift radio network subsystem activates a 16QAM operation in a radio link, the drift radio network subsystem sends the absolute grant according to Table 1 and sends the relative grant according to Table 4, thus resulting in occurrence of the following problems.

It is assumed that the drift radio network subsystem sends the absolute grant with an index number 2 to the terminal, the absolute grant value corresponding to the index number 2 is (7/15)² according to Table 1. Subsequently, after the drift radio network subsystem calculates the desired scheduling grant value according to the fast scheduling algorithm and compares the desired scheduling grant value with the reference power ratio/reference record saving power ratio, if it is desirable to decrease or down-regulate the power ratio. The drift radio network subsystem finds the minimum granularity in Table 4 is (11/15)² according to Table 4, thus it is obvious that the drift radio network subsystem can not inform the terminal to perform a Down operation through the relative grant.

It is assumed that the drift radio network subsystem sends the absolute grant with the index number 31 to the terminal, the absolute grant value corresponding to the index number 31 is (168/15)²x6 according to Table 1. Subsequently, after the drift radio network subsystem calculates the desired scheduling grant value according to the fast scheduling algorithm and compares the desired scheduling grant value and the reference power ratio/reference record saving power ratio, if it is desirable to up-regulate the power ratio, such as to make full use of 16QAM up to (377/15)²x4, at this point, since the absolute grant value is (168/15)²x6, which is the maximum granularity in Table 1, the drift radio network subsystem can only select to use UP control signaling of the relative grant to inform the terminal to up-regulate the power ratio step by step, but can not use the absolute grant directly. Similarly, if the drift radio network subsystem desires that the absolute grant value be decreased from (377/15)²x4 to (168/15)²x6, the drift radio network subsystem also can only inform the terminal to down-regulate the power ratio step by step through DOWN control signaling of the relative grant. However, the processing at each level will at least double processing delay, which has a significant influence on performance, such that the terminal cannot be guaranteed to be responded timely through the fast scheduling, thus the fast scheduling will lose its significance.

### Summary of the Invention

In view of this, a main object of the present invention is to provide a method and system for realizing grant in fast scheduling so as to guarantee normal realization of the grant and ensure the performance of the fast scheduling.

In order to achieve the foregoing object, the technical scheme of the present invention is implemented as follows.

The present invention provides a method for realizing grant in fast scheduling comprising:
when a 16 Quadrature Amplitude Modulation (16QAM) operation is activated, a drift radio network subsystem determining a scheduling grant table according to an absolute grant value mapping relationship table specified by a serving radio network subsystem; and
implementing grant according to the specified absolute grant value mapping relationship table and the determined scheduling grant table.

The method further comprises:
the serving radio network subsystem sending Radio Network Subsystem Application Part (RNSAP) layer control signaling to the drift radio network subsystem; and
the RNSAP layer control signaling carrying an uplink 16QAM operation indication information element for indicating whether the uplink 16QAM operation is activated and an enhanced dedicated channel absolute grant channel table selection information element for indicating the absolute grant value mapping relationship table used by the drift radio network subsystem.

Determining the scheduling grant table comprises:
when a value of the enhanced dedicated channel absolute grant channel table selection information element carried in the RNSAP layer control signaling is included in absolute grant value mapping relationship table one, determining to use scheduling grant table one to process relative grant signaling; and
when a value of the enhanced dedicated channel absolute grant channel table selection information element carried in the RNSAP layer control signaling is included in absolute grant value mapping relationship table two, determining to use scheduling grant table two to process relative grant signaling.

The present invention provides a system for realizing grant in fast scheduling comprising at least a serving radio network subsystem and one or more drift radio network subsystems, wherein
the serving radio network subsystem is configured to send RNSAP layer control signaling to the drift radio network subsystem; and
the drift radio network subsystem is configured to analyze the received RNSAP layer control signaling, determine a scheduling grant table according to a specified absolute grant value mapping relationship table in the RNSAP layer control signaling when an uplink 16QAM operation is activated, and implement the grant according to the specified absolute grant value mapping relationship table and the determined scheduling grant table.

The drift radio network subsystem comprises at least an analysis module and a determination module, wherein
the analysis module is configured to receive and analyze the RNSAP layer control signaling from the serving radio network subsystem, and send a notification to the determination module when an uplink 16QAM operation indication information element carried in the RNSAP layer control signaling is set as activated, the notification carrying the specified absolute grant value mapping relationship table in the analyzed RNSAP layer control signaling; and
the determination module is configured to receive the notification from the analysis module, determine the scheduling grant table according to the absolute grant value mapping relationship table carried in the notification, and implement the grant according to the specified absolute grant value mapping relationship table and the determined scheduling grant table.

The determination module is specifically configured to:
determine to use scheduling grant table one to process relative grant signaling when the absolute grant value mapping relationship table carried in the notification is absolute grant value mapping relationship table one; and
determine to use scheduling grant table two to process the relative grant signaling when the absolute grant value mapping relationship table carried in the notification is absolute grant value mapping relationship table two.

It can be seen from the above technical scheme provided by the present invention that the serving radio network subsystem sends the RNSAP layer control signaling to the drift radio network subsystem, the drift radio network subsystem analyzes the received RNSAP layer control signaling, determines the scheduling grant table according to the specified absolute grant value mapping relationship table in the RNSAP layer control signaling when the uplink 16QAM operation is activated, and implements the grant according to the specified absolute grant value mapping relationship table and the determined scheduling grant table. In the method in accordance with the present invention, the scheduling grant table, determined by the drift radio network subsystem according to the specified absolute grant value mapping relationship table in the RNSAP layer control signaling, is a scheduling grant table in which the actual grant value corresponding to the maximum index is the same as the actual grant value in the absolute grant value mapping relationship table, therefore, a base station and UE cooperate between absolute grant and scheduling grant of an E-AGCH based on the same mapping relationship, thereby guaranteeing the normal realization of the grant and ensuring the performance of the fast scheduling.

### Brief Description of Drawings

FIG. 1 is a flow diagram of a method for realizing grant in fast scheduling according to the present invention.
FIG. 2 is a block diagram of a system for realizing grant in fast scheduling according to the present invention.
FIG. 3 is a flow diagram of a method for realizing grant in fast scheduling according to the first embodiment the present invention.
FIG. 4 is a flow diagram of a method for realizing grant in fast scheduling according to the second embodiment of the present invention.

### Preferred Embodiments of the Present Invention

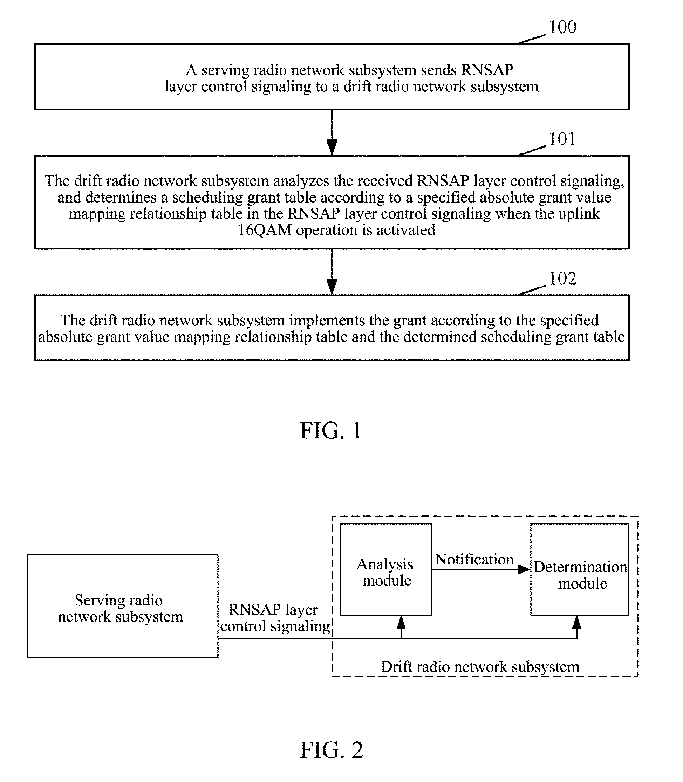

FIG. 1 is a flow diagram of a method for realizing grant in fast scheduling according to the present invention, which, as shown in FIG. 1, comprises the following steps.

In step 100, a serving radio network subsystem sends RNSAP layer control signaling to a drift radio network subsystem. The implementation in this step belongs to the prior art.

The RNSAP layer control signaling carries an uplink 16QAM operation indication information element for indicating whether an uplink 16QAM operation is activated and an enhanced dedicated channel absolute grant channel table selection information element for indicating an absolute grant value mapping relationship table used by the drift radio network subsystem.

In step 101, the drift radio network subsystem analyzes the received RNSAP layer control signaling, and determines a scheduling grant table according to a specified absolute grant value mapping relationship table in the RNSAP layer control signaling when the uplink 16QAM operation is activated.

In this step, when the uplink 16QAM operation indication information element carried in the RNSAP layer control signaling is set as activated, it is indicated that the uplink 16QAM operation is activated.

Since actual grant values corresponding to the maximum indexes in the absolute grant value mapping relationship table one (as shown in Table 1) and scheduling grant table one (as shown in Table 3), and in the absolute grant value mapping relationship table two (as shown in Table 2) and scheduling grant table two (as shown in Table 4) are identical, a base station and UE can cooperate between absolute grant and scheduling grant of an E-AGCH based on the same mapping relationship. Therefore, in the present invention, determining the scheduling grant table comprises: when a value of the enhanced dedicated channel absolute grant channel table selection information element carried in the RNSAP layer control signaling is included in the absolute grant value mapping relationship table one, indicating that the drift radio network subsystem uses the absolute grant value mapping relationship table one to map absolute grant, at this point, the drift radio network subsystem determining to use the scheduling grant table one to process relative grant signaling; when a value of the enhanced dedicated channel absolute grant channel table selection information element carried in the RNSAP layer control signaling is included in the absolute grant value mapping relationship table two, indicating that the drift radio network subsystem uses the absolute grant value mapping relationship table two to map the absolute grant, at the point, the drift radio network subsystem determining to use the scheduling grant table two to process the relative grant signaling.

In step 102, the drift radio network subsystem implements the grant according to the specified absolute grant value mapping relationship table and the determined scheduling grant table.

FIG. 2 is a block diagram of a system for realizing grant in fast scheduling according to the present invention, which, as shown in FIG. 2, comprises at least a serving radio network subsystem and one or more drift radio network subsystems.

The serving radio network subsystem is configured to send RNSAP layer control signaling to the drift radio network subsystem.

The drift radio network subsystem is configured to analyze the received RNSAP layer control signaling, determine a scheduling grant table according to a specified absolute grant value mapping relationship table in the RNSAP layer control signaling when an uplink 16QAM operation is activated, and implement the grant according to the specified absolute grant value mapping relationship table and the determined scheduling grant table.

The drift radio network subsystem comprises at least an analysis module and a determination module.

The analysis module is configured to receive and analyze the RNSAP layer control signaling from the serving radio network subsystem, and send a notification to the determination module when an uplink 16QAM operation indication information element carried in the RNSAP layer control signaling is set as activated, the notification carrying the specified absolute grant value mapping relationship table in the analyzed RNSAP layer control signaling; and

The determination module is configured to receive the notification from the analysis module, determine the scheduling grant table according to the absolute grant value mapping relationship table carried in the notification, and implement the grant according to the specified absolute grant value mapping relationship table and the determined scheduling grant table.

The determination module is specifically configured to determine to use scheduling grant table one to process relative grant signaling when the absolute grant value mapping relationship table carried in the notification is absolute grant value mapping relationship table one, and determine to use scheduling grant table two to process the relative grant signaling when the absolute grant value mapping relationship table carried in the notification is absolute grant value mapping relationship table two.

The method in accordance with the present invention will be described in detail in conjunction with embodiments below.

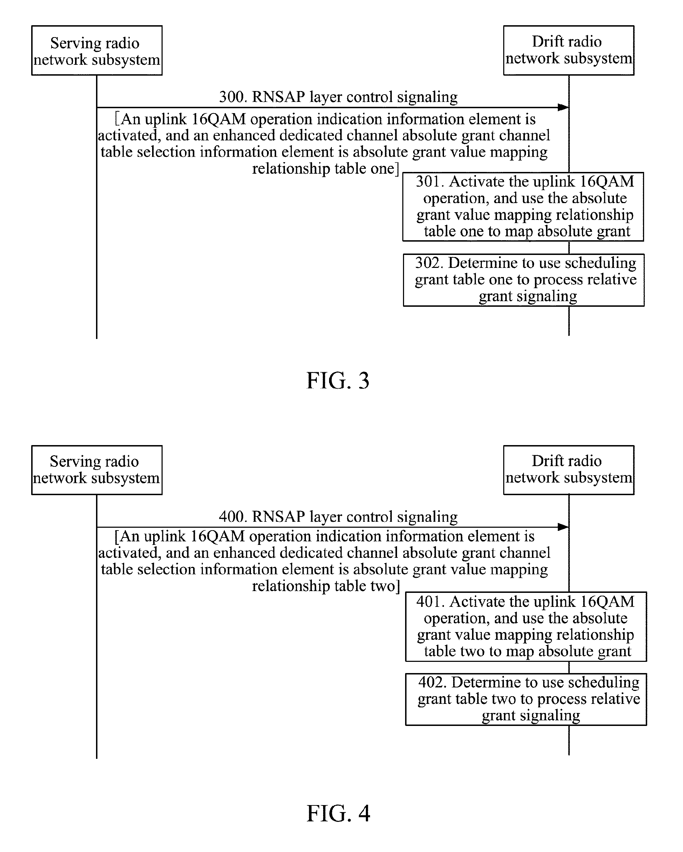

FIG. 3 is a flow diagram of a method for realizing grant in fast scheduling according to the first embodiment of the present invention, which, as shown in FIG. 3, comprises the following steps.

In step 300, a serving radio network subsystem sends RNSAP layer control signaling to a drift radio network subsystem. The RNSAP layer control signaling carries an uplink 16QAM operation indication information element which is set as activated and an enhanced dedicated channel absolute grant channel table selection information element, a value of which is included in the absolute grant value mapping relationship table one.

In step 301, the drift radio network subsystem analyzes the received RNSAP layer control signaling to learn that the uplink 16QAM operation is set as activated such that the drift radio network subsystem activates the uplink 16QAM operation in a radio link, and learns that the value of the enhanced dedicated channel absolute grant channel table selection information element is included in the absolute grant value mapping relationship table one, thus, the drift radio network subsystem uses the absolute grant value mapping relationship table one to map absolute grant.

In step 302, when the drift radio network subsystem activates the uplink 16QAM operation in the radio link, in the case that the absolute grant value mapping relationship table one is used to map the absolute grant, the drift radio network subsystem determines to use the scheduling grant table one to process relative grant signaling.

The drift radio network subsystem sends serving relative grant according to the scheduling grant table one, with the serving relative grant specifically including three values, UP, HOLD and DOWN. The drift radio network subsystem sends non-serving relative grant according to the scheduling grant table one, with the non-serving relative grant specifically including two values, HOLD and DOWN.

FIG. 4 is a flow diagram of a method for realizing grant in fast scheduling according to the second embodiment of the present invention, which, as shown in FIG. 4, comprised the following steps.

In step 400, a serving radio network subsystem sends RNSAP layer control signaling to a drift radio network subsystem. The RNSAP layer control signaling carries an uplink 16QAM operation indication information element which is set as activated and an enhanced dedicated channel absolute grant channel table selection information element, a value of which is included in the absolute grant value mapping relationship table two.

In step 401, the drift radio network subsystem analyzes the received RNSAP layer control signaling to learn that an uplink 16QAM operation is set as activated such that the drift radio network subsystem activates the uplink 16QAM operation in a radio link, and learns that the value of the enhanced dedicated channel absolute grant channel table selection information element is included in the absolute grant value mapping relationship table two, thus, the drift radio network subsystem uses the absolute grant value mapping relationship table two to map absolute grant.

In step 402, when the drift radio network subsystem activates the uplink 16QAM operation in the radio link, in the case that the absolute grant value mapping relationship table two is used to map the absolute grant, the drift radio network subsystem determines to use the scheduling grant table two to process relative grant signaling.

The drift radio network subsystem sends serving relative grant according to the scheduling grant table two, with the serving relative grant specifically including three values, UP, HOLD and DOWN. The drift radio network subsystem sends non-serving relative grant according to the scheduling grant table two, with the non-serving relative grant specifically including two values, HOLD and DOWN.

For example, when the drift radio network subsystem activates the uplink 16QAM operation in the radio link, the drift radio network subsystem uses the absolute grant value mapping relationship table two (as shown in Table 2) to map the absolute grant. It is assumed that the drift radio network subsystem sends the absolute grant with an index number 31 to a terminal, an absolute grant value corresponding to the index number 31 is (377/15)²x4 according to Table 2. After a UE receives the index number 31, according to the method of the present invention, the UE searches the scheduling grant table two (as shown in Table 4) for a specific grant value of (377/15)²x4, and then determines the power based on (377/15)²x4 directly and selects and sends data.

As another example, when the drift radio network subsystem activates the uplink 16QAM operation in the radio link, the drift radio network subsystem uses the absolute grant value mapping relationship table one (as shown in Table 1) to map the absolute grant. It is assumed that the drift radio network subsystem sends the absolute grant with an index number 2 to a terminal, an absolute grant value corresponding to the index number 2 is (7/15)² according to Table 1. After receiving the index number 2, a UE searches the scheduling grant table one (as shown in Table 3) for a specific grant value of (7/15)². Therefore, after the UE receives a DOWN command sent by the base station, the UE subtracts 1 from the grant index (equal to 1), searches the scheduling grant table one (as shown in Table 3) for a specific grant value of (6/15)², and then determines the power based on (6/15)² and selects and sends data.

It can be seen clearly from the above two embodiments that since actual grant values corresponding to the maximum indexes in the absolute grant value mapping relationship table one (as shown in Table 1) and scheduling grant table one (as shown in Table 3), and in the absolute grant value mapping relationship table two (as shown in Table 2) and scheduling grant table two (as shown in Table 4) are identical, in the method in accordance with the present invention, the scheduling grant table, determined by the drift radio network subsystem according to the specified absolute grant value mapping relationship table in the RNSAP layer control signaling, is a scheduling grant table in which the actual grant value corresponding to the maximum index is the same as the actual grant value in the absolute grant value mapping relationship table, therefore, the base station and UE cooperate between the absolute grant and scheduling grant of the E-AGCH based on the same mapping relationship, thereby guaranteeing the normal realization of the grant and ensuring the performance of the fast scheduling.

### Industrial Applicability

In the present invention, the scheduling grant table, determined by the drift radio network subsystem according to the specified absolute grant value mapping relationship table in the RNSAP layer control signaling, is a scheduling grant table in which the actual grant value corresponding to the maximum index is the same as the actual grant value in the absolute grant value mapping relationship table, therefore, the base station and UE cooperate between the absolute grant and scheduling grant of the E-AGCH based on the same mapping relationship, thereby guaranteeing the normal realization of the grant and ensuring the performance of the fast scheduling.

The above description is only the preferred embodiments of the present invention and is not intended to limit the protection scope of the present invention. Any modification, equivalent substitution and variation made within the spirit and principle of the present invention should be covered in the protection scope of the present invention.

## Claims

1. A method for realizing grant in fast scheduling comprising:
when a 16 Quadrature Amplitude Modulation (16QAM) operation is activated, a drift radio network subsystem determining a scheduling grant table according to an absolute grant value mapping relationship table specified by a serving radio network subsystem; and
implementing grant according to the specified absolute grant value mapping relationship table and the determined scheduling grant table.

2. The method according to claim 1, further comprises:
the serving radio network subsystem sending Radio Network Subsystem Application Part (RNSAP) layer control signaling to the drift radio network subsystem; and
the RNSAP layer control signaling carrying an uplink 16QAM operation indication information element for indicating whether the uplink 16QAM operation is activated and an enhanced dedicated channel absolute grant channel table selection information element for indicating the absolute grant value mapping relationship table used by the drift radio network subsystem.

3. The method according to claim 2, wherein determining the scheduling grant table comprises:
when a value of the enhanced dedicated channel absolute grant channel table selection information element carried in the RNSAP layer control signaling is included in absolute grant value mapping relationship table one, determining to use scheduling grant table one to process relative grant signaling; and
when a value of the enhanced dedicated channel absolute grant channel table selection information element carried in the RNSAP layer control signaling is included in absolute grant value mapping relationship table two, determining to use scheduling grant table two to process relative grant signaling.

4. A system for realizing grant in fast scheduling comprising at least a serving radio network subsystem and one or more drift radio network subsystems, wherein
the serving radio network subsystem is configured to send RNSAP layer control signaling to the drift radio network subsystem; and
the drift radio network subsystem is configured to analyze the received RNSAP layer control signaling, determine a scheduling grant table according to a specified absolute grant value mapping relationship table in the RNSAP layer control signaling when an uplink 16QAM operation is activated, and implement the grant according to the specified absolute grant value mapping relationship table and the determined scheduling grant table.

5. The system according to claim 4, wherein the drift radio network subsystem comprises at least an analysis module and a determination module, and wherein
the analysis module is configured to receive and analyze the RNSAP layer control signaling from the serving radio network subsystem, and send a notification to the determination module when an uplink 16QAM operation indication information element carried in the RNSAP layer control signaling is set as activated, the notification carrying the specified absolute grant value mapping relationship table in the analyzed RNSAP layer control signaling; and
the determination module is configured to receive the notification from the analysis module, determine the scheduling grant table according to the absolute grant value mapping relationship table carried in the notification, and implement the grant according to the specified absolute grant value mapping relationship table and the determined scheduling grant table.

6. The system according to claim 5, wherein the determination module is specifically configured to:
determine to use scheduling grant table one to process relative grant signaling when the absolute grant value mapping relationship table carried in the notification is absolute grant value mapping relationship table one; and
determine to use scheduling grant table two to process the relative grant signaling when the absolute grant value mapping relationship table carried in the notification is absolute grant value mapping relationship table two.
